# EUROPEAN PATENT APPLICATION

(11) **EP 4 336 620 A1**
(43) Date of publication of application: **13.03.2024**
(21) Application number: 23195622.8
(22) Date of filing: 06.09.2023
(51) Int. Cl.: H01M 10/28, H01M 10/615, H01M 10/627, H01M 10/637, H01M 50/287, H01M 10/42, H01M 10/48, H01M 10/6571, F21V 29/90

(54) **ELECTRONIC DEVICE AND RELATIVE OPERATING METHOD**

(30) Priority: 06.09.2022 IT 202200018156
(71) Applicant: Cortem S.p.A., 34070 Villesse (IT)
(72) Inventor: Gratton, Riccardo, 34151 Trieste (TS) (IT)
(74) Representative: Petraz, Gilberto Luigi

(57) **Abstract**

Electronic device (10), comprising a box-like casing (12) for housing at least one among an electronic circuit (15) and one or more batteries (13), a heating element (33) and a temperature monitoring element (34), operatively connected to each other and housed in said casing (12).

## Description

### FIELD OF THE INVENTION

The present invention concerns an electronic device, in particular an electric power supply device of an electronic apparatus which can be used, advantageously but not exclusively, for emergency lamps or circuits.

In particular, the electronic device can also be used in areas where the formation of an explosive atmosphere, consisting of a mixture of air and flammable substances in the form of gases, vapours or fog, is likely to occur occasionally. The electronic device according to the invention and the emergency lamp or circuit associated therewith can be used, preferably and in a non-limiting manner, in industrial areas, shipyards, chemical industry, oil and natural gas extraction industry, petrol stations, offshore industry, marine sector, tankers, naval shipyards, power plants, public rescue services and the like.

The present invention further relates to an operating method of the electronic device and to an emergency lamp comprising the aforesaid electronic device.

### BACKGROUND OF THE INVENTION

Emergency lamps are lamps which turn on automatically when there is a malfunction or blackout of the main power supply, having batteries for the emergency power supply therein. Such batteries have a minimum operating temperature comprised between -5 °C and -20 °C, but in certain parts of the world it is required that the lamps also operate at much lower temperatures, for example in temperature conditions up to and around - 60 °C.

It is known that, in the presence of an explosive atmosphere, the electronic components of the electronic apparatuses, including lamps, can cause the triggering of an explosion of the explosive atmosphere which comes into contact with a trigger source in the electronic apparatus.

EP2648269A1, US8574738B2, GB2574364A and CN214898599U disclose devices for batteries of emergency lamps comprising a temperature regulation unit associated with a heating element which is directly wrapped around, or arranged in contact with the battery, or the battery pack to be heated. Such solutions are not very versatile and allow to monitor and adjust the temperature of a single component. In the case of multiple batteries, it is therefore necessary to provide a respective heating element for each of them.

Other power supply devices with batteries are disclosed in GB2161317A and CN 114976445A.

There is therefore the need to perfect a power supply device, and to devise a production method which can overcome at least one of the disadvantages of the state of the art.

To do this, it is necessary to solve the technical problem of identifying components and technologies for the manufacture of devices suitable for safely and reliably powering an apparatus associated therewith, in particular an emergency lamp, even in temperature conditions well below zero.

In particular, a purpose of the present invention is to provide an electronic device for an electronic apparatus, and to devise a relative operating method, suitable for operating even in temperature conditions well below zero.

Another purpose of the present invention is to provide an electronic device which is also suitable for use in environments with a potential risk of explosions.

Still another purpose of the present invention is to provide an electronic device suitable for ensuring the operation of the electronic components therein even in climatic conditions with temperatures well below zero.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, and to resolve the technical problem disclosed above in a new and original way, also achieving considerable advantages compared to the state of the prior art, an electronic device according to the present invention comprises a box-like casing for housing at least one among an electronic circuit and one or more batteries.

According to embodiments, the electronic device is a power supply device suitable for powering an electronic apparatus and comprises one or more batteries arranged inside the box-like casing.

According to other embodiments, the electronic device comprises an electronic circuit configured to be connected on one side to an electronic apparatus to be powered and on the other side to an electrical network.

The electronic circuit can comprise a plurality of electrical and/or electronic components connected to each other. By way of example, the electronic circuit can be a converter suitable for transforming the electrical energy supplied by the electrical network into electrical energy having voltage and current values suitable for powering the electronic apparatus.

The aforesaid electronic apparatus can in particular be an emergency lamp.

According to possible variants, the electronic apparatus can be or comprise an audible emergency warning device.

In accordance with an aspect of the present invention, the electronic device comprises a heating element and a temperature monitoring element, operatively connected to each other and housed in the aforesaid casing; the monitoring element is configured to detect the temperature of the at least one electronic circuit and/or of the one or more batteries and to activate the heating element when this temperature is lower than a predetermined threshold value.

In doing so, at least the advantage is obtained of providing an electronic device suitable for operating, and possibly for electronically powering an apparatus associated therewith in a safe and reliable manner, even for temperatures which can reach -60°C.

In accordance with another aspect of the present invention, the monitoring element is electrically connected in series with the heating element by means of electrical conductors and configured to allow the passage of electric current for temperature values below the threshold value.

In accordance with another aspect of the present invention, the monitoring element is a bimetallic thermostat comprising one or more bimetallic thermal switches.

In accordance with another aspect of the present invention, the heating element is an electrical resistance; the electronic device comprises a printed circuit in which the electrical resistance is integrated. Advantageously, thereby, the heating element has a small size and can be easily integrated in the casing housing the batteries, maintaining a small footprint.

In accordance with another aspect of the invention, the heating element is separated and spaced from said at least one electronic circuit and/or said one or more batteries. Thereby, the activation of the heating element allows to heat several components together arranged inside the housing casing.

In the case in which both an electronic circuit and at least one battery are present inside the housing casing, the heating element can therefore heat both.

In accordance with another aspect of the present invention, the housing casing comprises a first chamber, for housing the one or more batteries, and a second chamber, for housing the heating element, separated from each other.

In accordance with a further aspect of the invention, the second chamber further comprises a seating which protrudes into the first chamber and in which the monitoring element is housed.

Advantageously, the monitoring element is thereby kept relatively far from the heating element and closer to the batteries, allowing to detect, with better precision, the temperature present in the first chamber. Furthermore, a separation is created between the atmosphere in the first chamber and that in the second chamber. Thanks to this separation, it is possible to resin the heating element and the monitoring element during production, for example by means of a special two-component polyurethane compound poured in liquid form, so as to make them comply with ATEX regulations.

In accordance with another aspect of the present invention, the device comprises a covering element for the thermal insulation and watertight closure of the second chamber, made by means of the aforesaid two-component polyurethane compound poured in liquid form into the second chamber and solidified therein.

In accordance with another aspect of the present invention, the housing casing comprises lateral walls and fins for sealing the covering element protruding from two or more of the lateral walls towards the inside of the second chamber. Advantageously, the fins allow a better adhesion of the polyurethane compound to the lateral walls and, in conclusion, a better fixing to the second chamber.

In accordance with another aspect of the present invention, the device comprises a rest base provided with spacer elements configured to keep the device raised from a rest surface. Advantageously, it is thereby possible to avoid the transfer of the heat produced by the heating element from the inside of the device to the rest surface.

In accordance with another aspect of the present invention, an operating method an electronic device comprising a box-like casing for housing at least one among an electronic circuit and one or more batteries housed in the casing, provides to detect the temperature of said electronic circuit and/or said one or more batteries by means of a temperature monitoring element; it further provides that the monitoring element activates a heating element when said temperature is lower than a predetermined threshold value.

In accordance with another aspect of the present invention, an emergency lamp comprises an emergency lighting module and an electronic device, in which the electronic device is a power supply device configured to electrically power the lighting module.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a three-dimensional exploded view of an electronic device, according to the present invention, in particular a power supply device;
- fig. 2 is a three-dimensional view of a detail of the electronic device of fig. 1;
- fig. 3 is a bottom view of an emergency lamp comprising the electronic device of fig. 1, according to the present invention;
- fig. 4 is a cross sectional view of the electronic device of fig. 3, along the section line IV-IV;
- fig. 5 is a three-dimensional exploded view of an electronic device according to the present invention in accordance with a variant embodiment according to an inverted view with respect to that of fig. 1.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DISCLOSURE OF SOME EMBODIMENTS OF THE PRESENT INVENTION

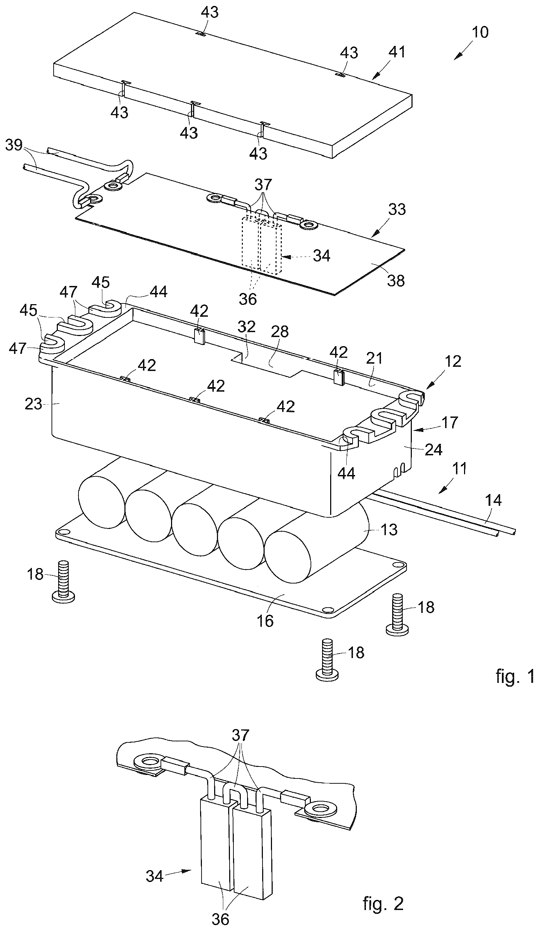

With reference to fig. 1, an electronic device 10 according to the present invention comprises a power supply unit 11 for the electric power supply of an electrical and/or electronic apparatus.

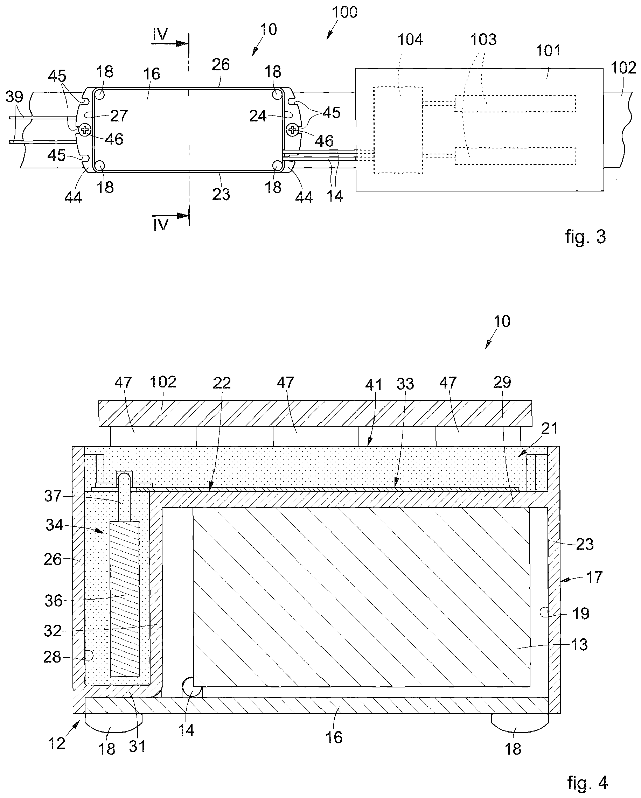

According to embodiments, the device 10 can be a power supply apparatus for an emergency lamp 100 (fig. 3).

The electric power supply unit 11 can be housed in a box-like housing casing 12.

In particular, the device 10 can be an accumulator, configured to accumulate electrical energy received from an electrical network and to supply it to a lighting module 101 of the lamp 100 when a malfunction, or black-out, of the electrical network occurs.

According to other embodiments, the device 10 can be an electric power supply, such as a converter suitable for transforming the electrical energy supplied by the electrical network into electrical energy having voltage and current values suitable for powering the electrical and/or electronic apparatus, for example the lighting module 101 of the lamp 100.

The electric power supply unit 11 comprises at least one among an electronic circuit 15 and one or more rechargeable batteries 13, a control interface (not shown in figures) and electrical conductors 14 (figures 3, 4 and 5).

In the embodiment of fig. 1 the device 10 comprises a plurality of batteries 13 arranged in the casing 12.

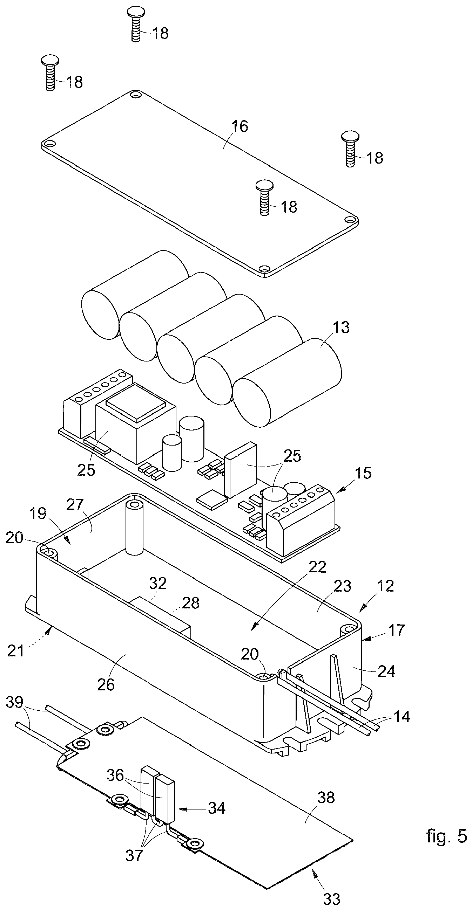

In the embodiment of fig. 5 the device 10 comprises an electronic circuit 15, comprising electrical and electronic components and one or more batteries 13, which are all housed in the casing 12.

Specifically, the control interface can be configured for managing the charging of the one or more batteries 13 by means of the electrical network and/or for managing the emergency power supply of the lamp 100; the electrical conductors 14 (figs. 3, 4 and 5) are adapted to connect the device 10 with the lighting module 101.

The casing 12 comprises a cover 16, for the extraction and/or positioning of the electronic circuit 15 and of the one or more batteries 13. The cover 16 can be fixed, in an openable manner, to a body 17 of the casing 12, for example by means of screws 18, interlocked or in similar or like modes.

The body 17 of the casing 12 comprises a first chamber 19 (fig. 4), for housing the one or more batteries 13 and possibly also the electronic circuit (fig. 5), and a second chamber 21.

The volume of the second chamber 21 is smaller than the volume of the first chamber 19; the ratio between the volumes of the second 21 and the first chamber 19 is approximately comprised between 1/10 and 1/3, preferably between 1/10 and 2/10.

Preferably, the first and second chamber 19, 21 extend in the longitudinal direction of the body 17 of the casing 12.

The first chamber 19 and the second chamber 21 can overlap one another.

The first chamber 19 is closed from the aforesaid cover 16. The lateral walls 23, 24, 26, 27 (fig. 3) of said body 17, at the first chamber 19, have elements for fixing the cover 16, such as compartments 20 (fig. 5) provided with threads for inserting the screws 18, cantilevered elements for interlocking the cover 16 or similar and the like.

The first and second chamber 19, 21 are separated from each other by a partition element 22 which seamlessly joins the lateral walls 23, 24, 26, 27 of said body 17 to each other. A watertight separation between said first and second chamber 19, 21 is thus maintained.

The partition element 22 and the lateral walls 23, 24, 26, 27 can be made in a single body, for example by means of moulding.

The second chamber 21 comprises a seating 28 which protrudes into the first chamber 19.

The seating 28 can have a box-like shape closed on five sides and with one end open at the partition element 22.

For this purpose, the partition element 22 has (fig. 4) at least two sections 29, 31, which are substantially parallel to each other and placed at different depths, joined by at least one intermediate wall 32, which define the aforesaid seating 28. Preferably, the two sections 29, 31 are substantially perpendicular, and the at least one intermediate wall 32 is substantially parallel to the lateral walls 23, 24, 26, 27.

The device 10 comprises a heating element 33, which can be an electrical resistance, housed in the aforesaid second chamber 21 of the casing 12.

The heating element 33 is thus separated and spaced from the battery 13 and/or the electronic circuit 15 and if both of the latter are present (fig. 5), the heating element 33 is adapted to provide heat to heat both.

The device 10 comprises a monitoring element 34 (figs. 1, 2 and 5) of the temperature in the casing 12, in particular of the temperature in the first chamber 19.

The monitoring element 34 is housed in the aforesaid seating 28 of the second chamber 21.

The monitoring element 34 is thus separated and spaced from the battery 13 and/or the electronic circuit 15.

The monitoring element 34 is configured to detect the temperature near the one or more batteries 13 or the electronic circuit 15 and to activate the heating element 33 when the temperature is lower than a preset threshold value. In particular, the monitoring element 34 is configured to detect the temperature of the first chamber 19, in which said batteries 13 and/or said electronic circuit 15 are arranged.

Both the heating element 33 and the monitoring element 34 are not directly connected to a component to be heated, but are configured to generally cooperate with the space inside the first chamber 19 to detect the temperature thereof and heat it if necessary, so as to also heat all the electrical/electronic components arranged therein.

The monitoring element 34 can be a bimetallic thermostat comprising one or more bimetallic thermal switches 36, in the example depicted in the figures two switches 36.

The monitoring element 34 is connected in series with the heating element 33 by means of electrical conductors 37 and configured to allow the passage of the electric current only for temperature values below a predetermined threshold value. For example, the bimetallic thermal switch 36 can be sized so that two terminals thereof approach each other, coming into mutual contact, thereby closing the electrical connection, at temperatures below the threshold value.

The aforesaid threshold value can be chosen among values below -5°C, preferably below -10°C, even more preferably below -20°C.

In the example shown in the figures, the heating element 33 and the monitoring element 34 are comprised in an electrical heater, understood as an electrical component having an electrical resistance which heats up when the external temperature falls below a predefined level. The heater can be a printed circuit 38 comprising the aforesaid electrical resistance, for example printed on one or both sides thereof or on an inner layer thereof, the aforesaid bimetallic thermostat and electrical conductors 37, 39 for the passage of electric current.

According to variant embodiments not shown in the figures, the heater can comprise a glass cloth strip, in which a single or multi-stranded resistance is inserted, covered by an insulating element, such as a polyester sheath reinforced with glass fibre filaments and/or the like.

The device 10 comprises a covering element 41 of the second chamber 21. Advantageously, the covering element 41 allows the thermal insulation and the watertight closure of the second chamber 21.

The covering element 41 is made of a material selected among a two-component polyurethane, epoxy or silicone compound, preferably it is a two-component polyurethane compound.

In particular, the covering element 41 is made by means of pouring the two-component polyurethane compound in liquid form in the second chamber 21 and its subsequent solidification.

Such a covering element 41 can also be provided in the embodiment illustrated in fig. 5.

The device 10 comprises fins 42 for sealing the covering element 41, formed at the inner side of two or more lateral walls 23, 24, 26, 27 of the body 17 of the casing 12, in the part where the second chamber 21 is formed.

In particular, the fins 42 are protruding from the lateral walls 23, 24, 26, 27 towards the inside of the second chamber 21. The fins 42 can have a T-shape, as shown in fig. 1, or other shapes adapted to allow a good adhesion of the material of the covering element 41.

During the creation of the covering element by means of pouring the polyurethane compound, the fins 42 will form slots 43, conjugated thereto, in the covering element 41.

The device 10 comprises, at a rest base 44 thereof, fixing elements 45 for fixing to the lamp 100, for example holes or loops for screws, hooks or the like, configured to cooperate with fixing devices, such as screws 46 (fig. 3), hooks or the like.

The device 10 comprises, at the rest base 44, spacer elements 47. The spacer elements 47 are configured to keep the device 10 raised from a plane on which the device 10 can be rested and/or installed.

For example in fig. 4, the spacer elements 47 allow to space the device 10 from the fixing base 102, or terminal block, of the lamp 100.

Advantageously, it is thereby possible to avoid the transfer of the heat produced by the heating element 33 from the inside of the device 10 to the remaining components of the lamp 100.

As shown in figs. 1 and 3, the rest base 44 protrudes from the footprint of the body 17 of the device 10 at the ends of the lateral walls 24, 27. The spacer elements 47 are raised edges protruding from the aforesaid rest base 44, in a direction perpendicular to the extension of the rest base 44.

The emergency lamp 100 (fig. 3) according to the invention comprises an emergency lighting module 101 and an electronic device 10 according to the invention.

In such an embodiment, the device 10 is a power supply device of the lighting module 101, of the battery type, by means of connection to an electrical network, or suitable for supplying energy both by means of battery and by means of the electrical network.

As shown in fig. 3, the lighting module 101 and the device 10 can both be fixed to a fixing base 102 of the lamp 100 and electrically connected to each other. According to alternative embodiments not shown in the figures, the lighting module 101 and the device 10 can be connected both mechanically and electrically to each other, without the need for a fixing base 102, or the device 10 can be integrated in the lighting module 101.

The lighting module 101 comprises one or more lighting sources 103, such as neon lamps, LED groups or the like, and a power supply unit 104 which converts the voltage provided by the power supply device 10 into direct current to turn on the one or more lighting sources 103.

The operation of the device 10 described so far, which corresponds to the method according to the present invention comprises the following steps:
- a temperature monitoring element 34 detects the temperature of the one or more batteries 13 for the electric power supply;
- when said temperature is lower than a predetermined threshold value, the monitoring element 34 activates a heating element 33.

In particular, the method provides to detect the temperature of the first chamber 19 in which the one or more batteries 13 are arranged.

It is clear that modifications and/or additions of parts may be made to the device 10 and to the method as described heretofore, without departing from the field and scope of the present invention, as defined by the claims.

It is also clear that, although the present invention has been described with reference to some specific examples, a person of skill in the art shall certainly be able to achieve other equivalent forms of electronic device and relative operating method, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Electronic device (10), comprising a box-like casing (12) for housing at least one among an electronic circuit (15) and one or more batteries (13), **characterized in that** it comprises a heating element (33) and a temperature monitoring element (34), operatively connected to each other and housed in said casing (12), wherein said monitoring element (34) is configured to detect the temperature of said electronic circuit (15) and/or said one or more batteries (13) and to activate said heating element (33) when said temperature is lower than a predetermined threshold value.

2. Device (10) as in claim 1, **characterized in that** said monitoring element (34) is electrically connected in series with said heating element (33) by means of electrical conductors (37) and configured to allow the passage of electric current for temperature values below said threshold value.

3. Device (10) as in claim 1 or 2, **characterized in that** said monitoring element (34) is a bimetallic thermostat comprising one or more bimetallic thermal switches (36).

4. Device (10) as in any one of claims 1 to 3, **characterized in that** said heating element (33) is an electrical resistance **and that** said device (10) comprises a printed circuit (38) in which said electrical resistance is integrated.

5. Device (10) as in any one of claims 1 to 4, **characterized in that** said heating element (33) is separated and spaced from said electronic circuit (15) and/or said one or more batteries (13).

6. Device (10) as in any one of claims 1 to 5, **characterized in that** said monitoring element (34) is separated and spaced from said electronic circuit (15) and/or said one or more batteries (13).

7. Device (10) as in any one of claims 1 to 6, **characterized in that** said housing casing (12) comprises a first chamber (19), for housing said electronic circuit and/or said one or more batteries (13), and a second chamber (21), for housing said heating element (33), separated from each other.

8. Device (10) as in claim 7, **characterized in that** said second chamber (21) comprises a seating (28) which protrudes into said first chamber (19) and in which said monitoring element (34) is housed.

9. Device (10) as in claim 7 or 8, **characterized in that** it comprises a covering element (41) for the thermal insulation and watertight closure of said second chamber (21), made of a two-component polyurethane compound poured in liquid form into said second chamber (21) and solidified therein.

10. Device (10) as in claim 9, **characterized in that** said housing casing (12) comprises lateral walls (23, 24, 26, 27) and fins (42) for sealing said covering element (41) protruding from two or more of said lateral walls (23, 24, 26, 27) towards the inside of said second chamber (21).

11. Device (10) as in any one of claims 1 to 10, **characterized in that** it comprises a rest base (44) provided with spacer elements (47) configured to keep said device (10) raised from a rest surface.

12. Device (10) as in any one of claims 1 to 11, **characterized in that** it is an electric power supply device of an electrical and/or electronic apparatus.

13. Operating method of an electronic device (10), comprising a box-like casing (12) for housing at least one among an electronic circuit (15) and one or more batteries (13), **characterized in that** it provides to detect the temperature of said electronic circuit (15) and/or of said one or more batteries (13) by means of a temperature monitoring element (34) which activates a heating element (33) when said temperature is lower than a predetermined threshold value.

14. Method as in claim 13, wherein said heating element (33) and said monitoring element (34) are separated and spaced from said electronic circuit (15) and/or said one or more batteries (13).

15. Emergency lamp (100) comprising an emergency lighting module (101) and an electronic device (10) as in any one of claims 1 to 12, wherein said electronic device (10) is a power supply device configured to electrically power said lighting module (101).
